(19) Europäisches Patentamt
European Patent Office
Office européen des brevets

(11) **EP 2 808 578 A1**

(12) **EUROPEAN PATENT APPLICATION**

(43) Date of publication:
**03.12.2014 Bulletin 2014/49**

(51) Int Cl.:
**F16F 7/10** *(2006.01)*

(21) Application number: **14164828.7**

(22) Date of filing: **16.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.04.2013 JP 2013086489**

(71) Applicant: **Kayaba System Machinery Co., Ltd. Tokyo 105-0012 (JP)**

(72) Inventors:
• **Isoda, Kazuhiko**
  **Chuo-ku, Tokyo 104-8370 (JP)**
• **Yamamoto, Yasuhiro**
  **Minato-ku, Tokyo 105-0012 (JP)**
• **Okamoto, Masanari**
  **Minato-ku, Tokyo 105-0012 (JP)**

(74) Representative: **Grünecker, Kinkeldey, Stockmair & Schwanhäusser**
  **Leopoldstrasse 4**
  **80802 München (DE)**

(54) **Vibration reduction apparatus**

(57)     A vibration reduction apparatus (B) includes a main damper unit (32) and a subsidiary damper unit (36). The main damper unit (32) has a main piston (31) that partitions the inside of the main cylinder (30) into first and second compartments (37 and 38). The subsidiary damper unit (36) has a partitioning wall (61) that partitions the inside of the subsidiary cylinder (33) into first and second internal spaces (62 and 63), a fluid pressure cylinder mechanism (60), and a rotary inertia mass mechanism (35). The fluid pressure cylinder mechanism (60) has a subsidiary piston (34) that partitions the first internal space into third and fourth compartments (45 and 46). The first and third compartments (37 and 45) communicate with each other through the first communicating pipe (47), and the second and fourth compartments (38 and 46) communicate with each other through the second communicating pipe (48).

FIG.1

EP 2 808 578 A1

**Description**

TECHNICAL FIELD

The present invention relates to a vibration reduction apparatus.

BACKGROUND ART

There is known a vibration reduction apparatus having a rotary inertia mass mechanism in which an inertial force caused by a rotary spindle is used as a reactive force. The rotary inertia mass mechanism is an apparatus that generates a reactive force proportional to a relative acceleration in both ends of an inertia mass damper. As the rotary inertia mass mechanism, there is known a damping piece discussed in JP 11-201224 A or a seismic isolator discussed in JP 3250795 B and JP 2007-10110 A.

Meanwhile, a rotary inertia mass mechanism capable of obtaining an inertial mass effect of several thousand times of an actual mass of the rotary spindle using a ball screw mechanism is also widely used in the art.

In such a rotary inertia mass mechanism using the ball screw mechanism, an inertial mass $\psi$ can be expressed as the following equation. Assuming that "$I_\theta$" denotes a moment of rotary inertia of a rotary spindle and "$L_d$" denotes a lead of a ball screw.

[Equation 1]

$$\psi = \left(\frac{2\pi}{L_d}\right)^2 I_\theta \qquad (1)$$

For example, as illustrated in JP 2007-205433 A and JP 2011-158015 A, there is also known a hydraulic rotary inertia mass mechanism (inertial pump damper) in which an inertial mass of a fluid is used. In the hydraulic rotary inertia mass mechanism, a pressure is applied to the fluid (liquid) divided in the cylinder based on a damper displacement, and the fluid flows through the communicating pipe (bypass pipe) having a diameter smaller than that of the cylinder. The hydraulic rotary inertia mass mechanism is configured to obtain an inertial mass effect heavier than the mass of the fluid housed in the communicating pipe by making a fluid flow velocity faster than a displacement velocity of the damper.

Here, the reactive force generated in the rotary inertia mass mechanism described above is proportional to the relative acceleration. Therefore, if the relative displacement, the velocity, or the acceleration applied to both ends of the damper becomes $\alpha$ times in an output side using an amplification mechanism (velocity amplification mechanism), the reactive force of the damper installed in the output side also becomes $\alpha$ times.

In addition, as the reactive force of the amplification mechanism becomes $\alpha$ times in the input side compared to the output side, the inertial mass $\psi$ (damper parameter) of the damper member becomes $\alpha^2$ times that of Equation 1 described above. This can be easily understood by considering that the energy (displacement × force) is equal between the input side and the output side.

Based on this fact, it is recognized that the rotary inertia mass mechanism is effectively combined with the amplification mechanism, and an apparatus using an amplification mechanism using a lever or a toggle mechanism or the like was proposed and commercialized.

However, a large space is necessary in a frame, and a deformation loss caused by a reaction of a pin coupling portion is significant. Therefore, it is difficult to implement a large-capacity damper with a compact size.

Meanwhile, an apparatus using an amplification mechanism using a planetary gear was also proposed. However, since an energy loss caused by an internal friction of the amplification mechanism of itself is significant, a more reasonable velocity amplification method is demanded.

SUMMARY OF INVENTION

Meanwhile, in a hydraulic apparatus such as an oil damper (vibration reduction apparatus or vibration control damper apparatus), it is known that a reactive force proportional to an area of the piston and a displacement inversely proportional to the area of the piston are easily obtained, and an energy loss is also negligible.

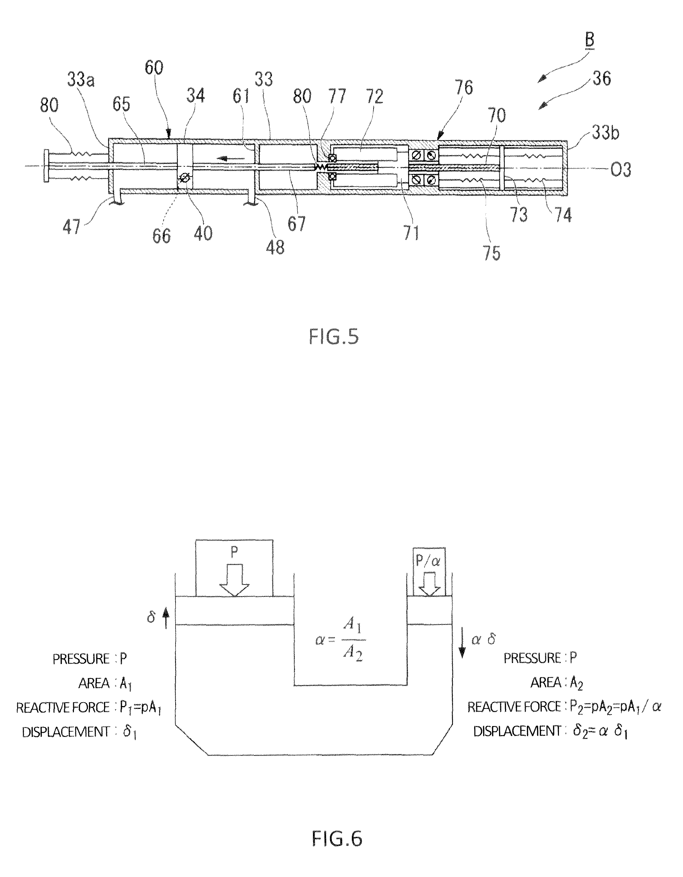

As apparent from the Pascal's principle, for example, if a pair of pipes having different cross-sectional areas (a ratio of areas is set to $A_1 : A_2 = \alpha : 1$) are connected as illustrated in FIG. 6, and the same pressure is applied thereto, the movement distance (displacement) becomes "$1 : \alpha$," and the force becomes "$\alpha : 1$." That is, compared to the left large-area pipe in FIG. 6, a force becomes $1/\alpha$ times, and a displacement becomes $\alpha$ times in the right small-area pipe.

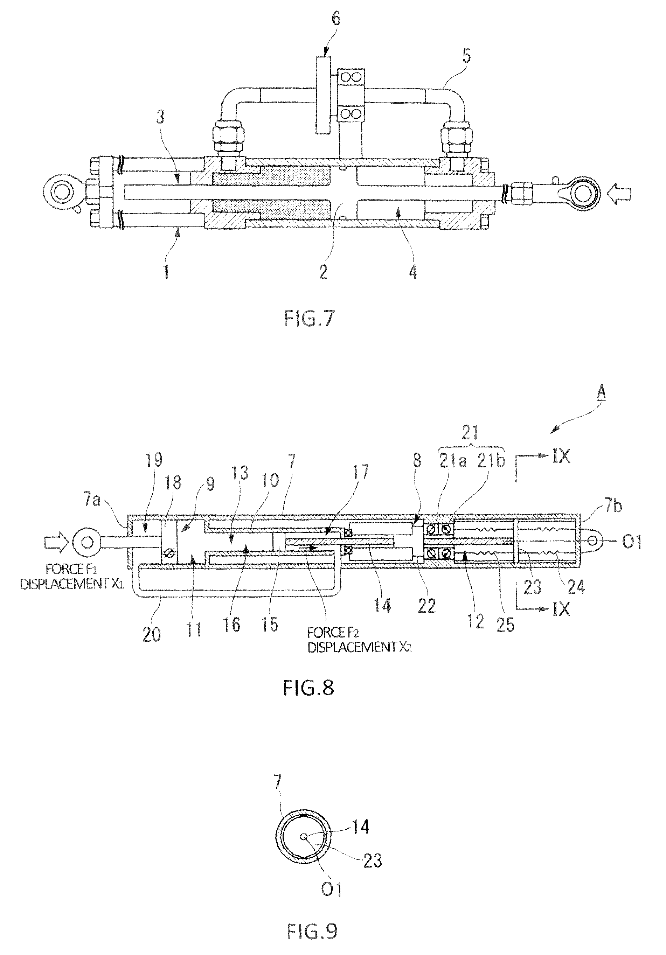

Based on this principle, as an amplification mechanism (velocity amplification mechanism) for increasing the displacement of the damper, a study was made for a method of combining a rotary inertia mass mechanism 6 with a communicating pipe 5 that causes the internal spaces 3 and 4 partitioned by the piston 2 to communicate with each other in the fluid pressure cylinder mechanism 1 as illustrated in FIG. 7. In this study, it was recognized that it is possible to obtain an inertial mass effect equal to or higher than that of a rotary inertia mass mechanism of the related art even when an external dimension is significantly smaller than that of the related art.

However, in this configuration, a large reactive force is generated in the communicating pipe 5 and the rotary inertia mass mechanism 6. For this reason, cost of corresponding to a decentering bending moment generated when the fluid pressure cylinder mechanism 1 is decentered from an axial center may increase.

In this regard, it is conceived that the main cylinder may receive the reactive force generated in the rotary inertia mass mechanism by housing the rotary inertia mass mechanism and the hydraulic mechanism (fluid pressure cylinder mechanism) in the inside of the main cylinder.

However, in this case, a size of the damper increases. In particular, as the entire length of the damper increases, it is difficult to apply to a short-span structure (a short-span frame structure).

It is therefore an object of the present invention to provide a compact vibration reduction apparatus having a fluid pressure cylinder mechanism as a velocity amplification mechanism for a rotary inertia mass mechanism so as to be also applicable to a short-span structure.

According to one aspect of the present invention, a vibration reduction apparatus that reduces a relative vibration between a pair of members includes a main damper unit interposed between the pair of members to reduce the relative vibration, a subsidiary damper unit arranged separately from the main damper unit, and first and second communicating pipes that connect the main damper unit and the subsidiary damper unit, wherein the main damper unit has a main cylinder, a main piston arranged slidably inside the main cylinder to partition an inner side of the main cylinder into first and second compartments, and a piston rod connected to the main piston and provided to extend to an outer side of the main cylinder, the subsidiary damper unit has a subsidiary cylinder, a partitioning wall that partitions an inner side of the subsidiary cylinder into a first internal space of one end side and a second internal space in the other end side of the subsidiary cylinder, a fluid pressure cylinder mechanism arranged in the first internal space, and a rotary inertia mass mechanism arranged in the second internal space, the fluid pressure cylinder mechanism has a subsidiary piston slidably arranged in the first internal space of the subsidiary cylinder to partition the first internal space into third and fourth compartments, and a subsidiary piston rod connected to the subsidiary piston and provided extend to the second internal space side through the partitioning wall, the rotary inertia mass mechanism has a ball screw connected to the subsidiary piston rod, a ball nut screwed to the ball screw and provided relatively movably along an axis line direction of the rotary inertia mass mechanism with respect to the ball screw and rotatably around the axis line, a rotary spindle installed in the ball nut to rotate around the axis line to follow the ball nut, and a rotation-constrained plate installed in the ball screw to constrain the ball screw movably in the axis line direction and non-rotatably around the axis line, the first and third compartments communicate with each other through the first communicating pipe, the second and fourth compartments communicate with each other through the second communicating pipe, and the first to fourth compartments and the first and second communicating pipes are filled with an actuating fluid.

BRIEF DESCRIPTION OF DRAWINGS

FIG. 1 is a diagram illustrating a vibration reduction apparatus according to an embodiment of the invention.
FIG. 2 is a cross-sectional view taken along a line II-II of FIG. 1.
FIG. 3 is a diagram illustrating a state that the vibration reduction apparatus is installed within a frame surface of a building.
FIG. 4 is a cross-sectional view taken along a line IV-IV of FIG. 3.
FIG. 5 is a diagram illustrating a modification of the vibration reduction apparatus.
FIG. 6 is a diagram for describing the Pascal's principle.
FIG. 7 is a diagram illustrating a vibration reduction apparatus obtained by combining a fluid pressure cylinder mechanism and a rotary inertia mass mechanism.
FIG. 8 is a diagram illustrating a vibration reduction apparatus according to a comparative example.
FIG. 9 is a cross-sectional view taken along a line IX-IX of FIG. 8.

DESCRIPTION OF EMBODIMENTS

Hereinafter, an embodiment of the invention will be described with reference to the accompanying drawings.

The vibration reduction apparatus according to an embodiment of the invention is an apparatus installed within a frame surface surrounded by pillars and girders in a building to reduce a relative vibration between a pair of members in a frame suffering from vibration caused by an earthquake or the like.

First, as a comparative example of the invention, a vibration reduction apparatus A (hybrid type rotary inertia mass mechanism) having a rotary inertia mass mechanism housed inside a fluid pressure cylinder will be described with reference to FIGS. 8 and 9.

As illustrated in FIG. 8, the vibration reduction apparatus A is obtained by housing a rotary inertia mass mechanism 8 inside a main cylinder 7 and combining a hydraulic mechanism (fluid pressure cylinder mechanism) 9 and a rotary inertia mass mechanism 8 in order to prevent a force from being applied from the outside of the main cylinder 7 along an axis line O1 direction.

More specifically, in the vibration reduction apparatus A, a subsidiary cylinder 10 is provided inside the main cylinder 7 with an outer diameter smaller than that of the main cylinder 7 coaxially along the axis line O1.

The subsidiary cylinder 10 is arranged to partition an inner portion 11 of one end 7a side and an inner portion 12 of the other end 7b side in the axis line O1 direction of the main cylinder 7 to cause the inner portion 11 of the one end 7a side and an inner portion 13 of the subsidiary cylinder 10 to communicate with each other.

A subsidiary piston 15 integrated into one end of the ball screw 14 is installed in the inside 13 of the subsidiary cylinder 10 movably (displaceably) along the axis line O1 direction. As a result, the inside 13 of the subsidiary cylinder 10 is partitioned by the subsidiary piston 15 into an internal space 16 of one side of the one end 7a side of the main cylinder 7 and an internal space 17 of the other side where the ball screw 14 is inserted.

In addition, a main piston 18 is arranged in the internal space 11 of the main cylinder 7. The internal space 19 of the main cylinder 7 and the internal space 17 where the ball screw 14 of the subsidiary piston 15 is inserted communicate with each other through a communicating pipe (bypass pipe) 20 by interposing the main piston 18.

A bearing 21 is provided in the internal space 12 of the main cylinder 7. The bearing 21 includes an outer race 21a fixed to the main cylinder 7 and an inner race 21b supported by the outer race 21a rotatably around the axis line O1. A ball nut 22 is fixed to the inner race 21b of the bearing 21.

The ball screw 14 and the ball nut 22 are screwed to each other. The ball nut 22 is installed rotatably but non-movably (non-displaceably) along the axis line O1 direction.

As illustrated in FIGS. 8 and 9, a substantially disk-like rotation-constrained plate 23 is integratedly installed in the other end of the ball screw 14 coaxially with each other along the center axis line O1. Since the rotation-constrained plate 23 is non-rotatably constrained and is movable along the axis line O1 direction, the ball screw 14 is non-rotatably constrained around the axis line O1 and is movable along the axis line O1 direction.

Restoration springs (restoration mechanism) 24 and 25 expanding and contracting in the axis line O1 direction are provided in both sides of the axis line O1 direction of the rotation-constrained plate 23. A hydraulic fluid (actuating fluid) is filled in the internal spaces 11 and 13 of the main cylinder 7 and the subsidiary cylinder 10, respectively.

In this configuration of the vibration reduction apparatus A, compared to a displacement $X_1$ and a force $F_1$ applied to the main piston 18, a displacement of $\alpha$ times ($X_2 = \alpha X_1$), an acceleration of $\alpha$ times ($X_2$ (".." over $X_2$) $= \alpha X_1$ (".." over $X_1$)), and a force of $1/\alpha$ times ($F_2 = F_1/\alpha$) are applied to the rotary inertia mass mechanism 8 directly connected to the subsidiary piston 15.

As a result, compared to an inertial mass $\psi 2$ of the rotary inertia mass mechanism 8 installed in practice, the damper connected to the main piston 18 has a load force $F_2$ of $\alpha$ times and a relative acceleration of $1/\alpha$ times, so that an inertial mass represented as a ratio between the force and the acceleration becomes $\alpha^2$ times.

Therefore, in the vibration reduction apparatus A, a force applied to the ball screw 14 is small. Accordingly, it is possible to implement a large-capacity damper using an inexpensive ball screw 14.

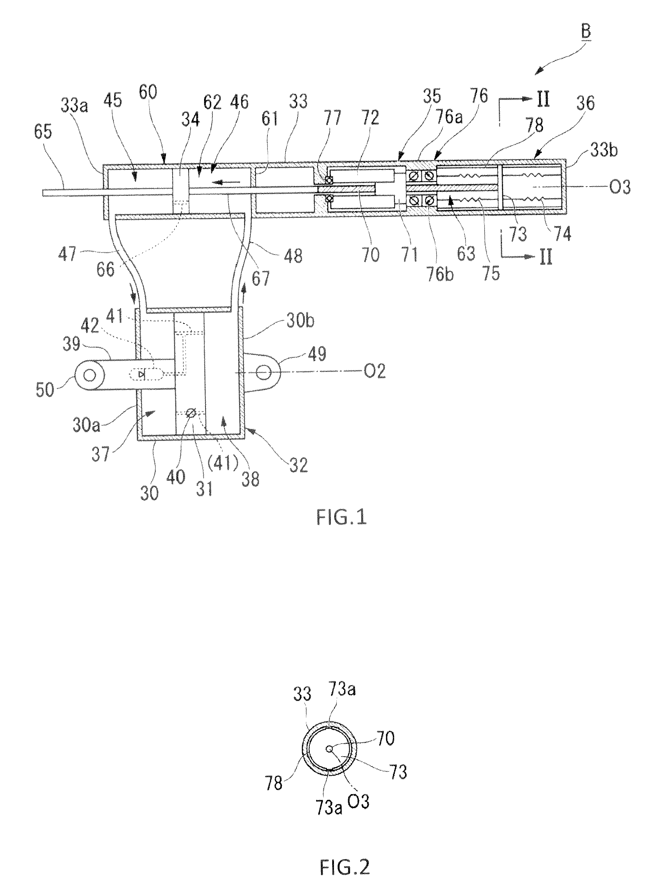

Subsequently, a vibration reduction apparatus B according to an embodiment of the invention will be described with reference to FIGS. 1 to 5.

As illustrated in FIGS. 1 and 2, the vibration reduction apparatus B includes a main damper unit 32 having a main cylinder 30 and a main piston 31 and a subsidiary damper unit 36 having a subsidiary cylinder 33, a subsidiary piston 34, and a rotary inertia mass mechanism 35. The main damper unit 32 and the subsidiary damper unit 36 are separately provided.

The main damper unit 32 has the main cylinder 30 and the main piston 31 arranged in the inside of the main cylinder 30 slidably along the axis line O2 direction to partition the inside of the main cylinder 30 into first and second compartments 37 and 38.

A first piston rod 39 is inserted into one end 30a side of the axis line O2 direction of the main cylinder 30 coaxially with the main cylinder 30. The main piston 31 is connected to the first piston rod 39 (the other end of the first piston rod 39).

The first and second compartments 37 and 38 are filled with an actuating fluid such as water, oil, or various viscous fluids.

The main piston 31 is provided with a relief valve (safety valve or anti-overload mechanism) 40 for flowing the actuating fluid when a pressure difference between the first and second compartments 37 and 38 exceeds a predetermined relief pressure. By providing the relief valve 40, it is possible to prevent an excessive reactive force from being generated in the main damper unit 32 (and the subsidiary damper unit 36) even for an unexpected input (a large vibration or external force).

The main piston 31 is provided with an orifice 41. When the relief valve 40 is operated, the orifice 41 serves as a flow rate control orifice for allowing the actuating fluid to flow between the first and second compartments 37 and 38 to restore the main piston 31 to its original position. By providing the orifice 41, it is possible to restore the main piston 31 to its original position even with a weak restoring force. Since the orifice 41 is formed to flow the actuating fluid with a small flow rate, it does not mostly affect a vibration reduction characteristic of the main damper unit 32, that is, a damping characteristic at the event of an earthquake and the like.

An accumulator 42 is embedded in the main damper unit 32, connected to (communicating with) the orifice 41.

The main damper unit 32 is connected to a first communicating pipe 47 that causes the first compartment 37 to communicate with a third compartment 45 of the subsidiary damper unit 36 described below and a second communicating pipe 48 that causes the second compartment 38 to communicate with a fourth compartment 46 of the subsidiary damper unit 36. The first and second communicating pipes 47 and 48 circulate the actuating fluid between the first and third compartments 37 and 45 and between the second and fourth compartments 38 and 46, respectively.

The main damper unit 32 has clevises (clevis joint or connecting means) 49 and 50 in one end of the first piston rod 39 provided to extend from one end 30a of the main cylinder 30 to the outside along the axis line O2 direction and the other end 30b of the main cylinder 30, respectively.

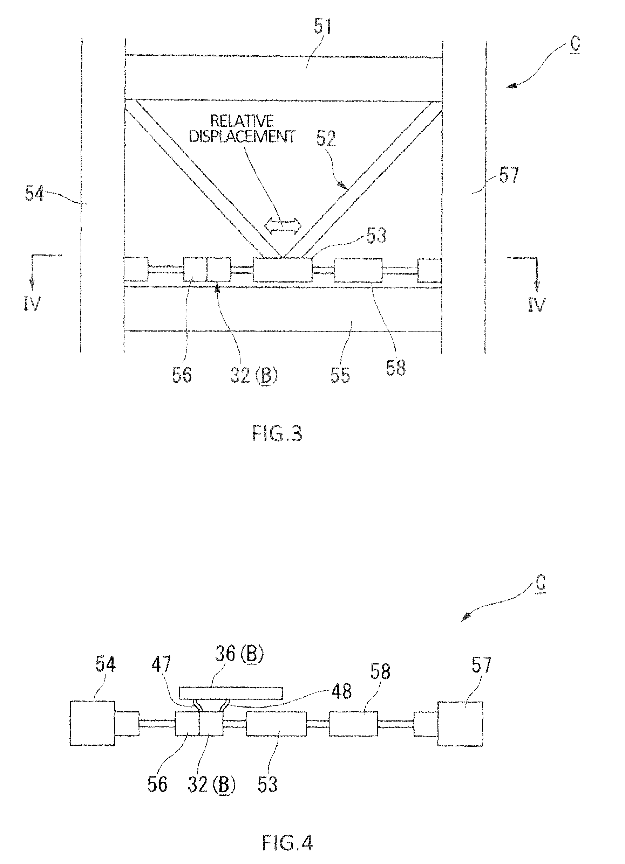

The vibration reduction apparatus B according to this embodiment is applied to, for example, a building having a V-shaped shear link brace 52 installed within a frame plane by connecting a pair of upper ends to an upper girder (one of a pair of members) 51 as illustrated in FIG. 3 (cross-sectional view) and FIG. 4 (plan view). The main damper unit 32 of the vibration reduction apparatus B is installed within a frame plane of a building by connecting one of the clevises 50 to the jointing jig 53 integrated into the lower end of the shear link brace 52. In addition, according to this embodiment, the other clevis 49 of the main damper unit 32 is connected to a frame such as one of pillars 54 or a lower girder 55 included in the frame plane using a spring member 56. In this manner, the main damper unit 32 is interposed between a pair of members 51 and 55 of a frame that relatively vibrates by an earthquake and the like.

According to this embodiment, an oil damper 58 is installed in the opposite side to the main damper unit 32 using a jointing jig 53 provided in the lower end of the shear link brace 52. The oil damper 58 is installed by connecting one end to the jointing jig 53 and connecting the other end to a frame such as the other pillar 57.

The subsidiary damper unit 36 is formed by combining a rotary inertia mass mechanism 35 housed in the subsidiary cylinder 33 and a fluid pressure cylinder mechanism 60 as an amplification mechanism (velocity amplification mechanism) that amplifies a relative displacement, a velocity, and an acceleration applied to the rotary inertia mass mechanism 35 as illustrated in FIGS. 1 and 2.

The subsidiary cylinder 33 is provided with a partitioning wall 61 that partitions the inside into an internal space 62 of one end 33a side of the axis line 03 direction and an internal space 63 of the other end 33b side.

In the subsidiary damper unit 36, a fluid pressure cylinder mechanism 60 is provided in the internal space 62 of the subsidiary cylinder 33, and a rotary inertia mass mechanism 35 is provided in the internal space 63.

The fluid pressure cylinder mechanism 60 is arranged in the internal space 62 of the subsidiary cylinder 33 slidably along the axis line 03 direction and has the subsidiary piston 34 that partitions the internal space 62 into the third and fourth compartments 45 and 46.

A second piston rod 65 is inserted into one end 33a side of the subsidiary cylinder 33 coaxially with the subsidiary cylinder 33. The second piston rod 65 (the other end of the second piston rod 65) is connected to the subsidiary piston 34.

The third and fourth compartments 45 and 46 are filled with an actuating fluid such as water, oil, or various viscous fluids.

The subsidiary piston 34 is provided with an orifice 66. The orifice 66 serves as a flow rate control orifice for allowing the actuating fluid to move between the third and fourth compartments 45 and 46 to restore the subsidiary piston 34 to its original position.

Since the orifice 66 is formed to flow the actuating fluid with a small flow rate, it does not mostly affect a vibration reduction characteristic of the subsidiary damper unit 36, that is, a damping characteristic at the event of an earthquake and the like.

The first communicating pipe 47 has one end connected to the first compartment 37 of the main cylinder 30 of the main damper unit 32 and the other end connected to the third compartment 45 of the subsidiary cylinder 33. The second communicating pipe 48 has one end connected to the second compartment 38 of the main cylinder 30 and the other end connected to the fourth compartment 46 of the subsidiary cylinder 33.

As a result, the first and second communicating pipes 47 and 48 circulates the actuating fluid between the first compartment 37 of the main cylinder 30 and the third compartment 45 of the subsidiary cylinder 33 and between the second compartment 38 of the main cylinder 30 and the fourth compartment 46 of the subsidiary cylinder 33, respectively.

A high pressure is applied to the first and second communicating pipes 47 and 48 that connect the main damper unit 32 and the subsidiary damper unit 36. For this reason, it is preferable that a quick coupler couplable/decouplable in a one-touch manner be provided as a connector means for connecting the damper units 32 and 36 in order to reduce a pressure loss.

In this embodiment, the relief valve 40 is provided in the main piston 31. However, instead of the main piston 31, the relief valve may be provided in the subsidiary piston 34 such that the relief valve is operated when a pressure difference between the third and fourth compartments 45 and 46 exceeds a predetermined relief pressure. In this manner, the first and third compartments 37 and 45 communicate with each other through the first communicating pipe 47, and the second and fourth compartments 38 and 46 communicate with each other through the second communicating pipe 48. Therefore, similarly, in this case, it is possible to obtain the same effects as those of the case where the relief valve 40 is provided in the main piston 31.

The rotary inertia mass mechanism 35 is entirely housed in the internal space 63 of the subsidiary cylinder 33. The rotary inertia mass mechanism 35 is connected to the fluid pressure cylinder mechanism 60 using the third piston rod 67 whose one end is connected to the subsidiary piston 34 through the partitioning wall 61 so that it is drivenly operated by the subsidiary piston 34.

Specifically, the rotary inertia mass mechanism 35 includes: a ball screw 70 that has one end connected to the other end of the third piston rod 67 and is arranged coaxially with the subsidiary cylinder 33; a ball nut 71 screwed to the ball screw 70; a rotary spindle 72 installed in the ball nut 71 and drivenly rotated by the rotation of the ball nut 71; a rotation-constrained plate 73 provided in the other end of the ball screw 70 to freely move back and forth (be movably) along the axis line 03 direction to follow the ball screw 70 and constrained non-rotatably around the axis line 03; and restoration springs 74 and 75 of a restoration mechanism provided to bias the rotation-constrained plate 73 back and forth along the axis line 03 direction.

One end side of the ball screw 70 is indirectly connected to the subsidiary piston 34 by interposing the third piston rod 67. The ball screw 70 may be directly connected to the subsidiary piston 34 through the partitioning wall 61 without interposing the third piston rod 67.

The ball nut 71 screwed to the ball screw 70 is supported by the bearing 76. The bearing 76 includes a ring-like outer race 76a fixed to the inner surface of the subsidiary cylinder 33 and a ring-like inner race 76b arranged inside the cavity of the outer race 76a and supported by the outer race 76a rotatably around the axis line 03.

The ball screw 70 is inserted into the center hole of the inner race 76b of the bearing 76. The ball nut 71 is fixed to the inner race 76b of the bearing 76.

As a result, the ball nut 71 is provided rotatably around the axis line 03 and non-movably along the axis line 03 direction. In addition, the rotary spindle 72 is integratedly fixed to the ball nut 71.

The rotary spindle 72 is formed, for example, in a cylindrical shape. The ball screw 70 is inserted into the inside of rotary spindle 72. The ball nut 71 is fixed to one end of the rotary spindle 72, and the other end of the rotary spindle 72 is supported by the bearing 77 rotatably around the axis line 03 such that the axis line 03 of the rotary spindle 72 is coaxial with those of the ball screw 70 and the subsidiary cylinder 33.

The rotation-constrained plate 73 is to constrain the rotation of the ball screw 70 and is integratedly installed in the other end of the ball screw 70. The rotation-constrained plate 73 is formed in a substantially disk-like shape and has convex portions 73a protruding to the outside of the radial direction from the outer circumferential edges in both sides of the radial direction with respect to the center.

A guide tube 78 is installed in the inner surface of the subsidiary cylinder 33 from the bearing 76 to the other end 33b. Trenches hollowed in the outside of the radial direction to extend along the axis line 03 direction are formed in both sides of the radial direction with respect to the center of the guide tube 78.

The rotation-constrained plate 73 is installed by engaging the convex portions 73a with the trenches of the guide tube 78. The rotation-constrained plate 73 is provided movably in the axis line 03 direction due to guidance of the trenches of the guide tube 78 and non-rotatably around the axis line 03 due to restriction of the trenches.

The restoration springs (restoration mechanism) 74 and 75 are to restore the ball screw 70, that is, the subsidiary piston 34 to its original position. The restoration spring 74 is interposed between the rotation-constrained plate 73 and the other end 33b of the subsidiary cylinder 33, and the restoration spring 75 is interposed between the rotation-constrained plate 73 and the bearing 76. The restoration springs 74 and 75 are provided to bias the rotation-constrained plate 73 back and forth along the axis line 03 direction.

In this embodiment, as illustrated in FIGS. 3 and 4, the shear link brace 52, the vibration reduction apparatus B, and the oil damper 58 constitute a seismic control frame C of a shear link type building.

In the vibration reduction apparatus B according to this embodiment, the main damper unit 32 is installed within the frame plane by connecting both ends to the jointing jig 53 of the shear link brace 52 and a frame such as the pillar 54 or the girder 55. That is, the main damper unit 32 is installed between a pair of members relatively vibrating due to an earthquake and the like, and the subsidiary damper unit 36 is connected to the main damper unit 32 using the first and second communicating pipes 47 and 48.

For this reason, it is not necessary to install the subsidiary damper unit 36 within the frame plane, and it is possible to arbitrarily set the installation position depending on a length of the first or second communicating pipe 47 or 48 and the like. According to this embodiment, a flexible hydraulic hose or the like is applied to the first or second communicating pipe 47 or 48 to fix the subsidiary damper unit 36 onto a floor slab.

In the vibration reduction apparatus B, a relative displacement (interlayer displacement) is generated due to an earthquake and the like between a pair of members such as between the pillars 54 and 57, between the girders 51 and 55, and between the pillar 54 or 57 and the girder 51 or 55 to approach or retreat from each other. When a relative vibration is generated between a pair of members in this manner, the main piston 31 moves back and forth along the axis line O2 direction inside the main cylinder 30.

In this case, the actuating fluid circulates between the first compartment 37 of the main cylinder 30 and the third compartment 45 of the subsidiary cylinder 33 through the first communicating pipe 47 and circulates between the second and fourth compartments 38 and 46 through the second communicating pipe 48.

Since the subsidiary cylinder 33 is formed to have a smaller diameter than that of the main cylinder 30, the subsidiary piston 34 moves back and forth at a higher velocity by a longer movement distance along the axis line 03 direction than those of the main piston 31 in response to a relative vibration between a pair of members. That is, the velocity and the displacement of the back-and-forth movement of the subsidiary piston 34 are amplified, compared to those of the main piston 31 that moves back and forth in response to a relative vibration between a pair of members.

The main piston 31 is provided with a relief valve 40. For this reason, if a pressure difference between the first and second compartments 37 and 38 and a pressure difference between the third and fourth compartments 45 and 46 communicating with the compartments 37 and 38 through the communicating pipes 47 and 48, respectively, exceeds a predetermined relief pressure, the relief valve 40 is opened, and the pressure difference reaches a critical point. As a result, it is possible to prevent an excessive reactive force.

As the subsidiary piston 34 moves back and forth at an amplified velocity (or displacement), the ball screw 70 moves back and forth along the axis line 03 direction of the subsidiary cylinder 33 from its original position along with the subsidiary piston 34 against the biasing forces of the restoration springs 74 and 75. In this case, the ball screw 70 moves back and forth along the axis line 03 direction without rotation and is relatively displaced with respect to the subsidiary cylinder 33 because the convex portion 73a of the rotation-constrained plate 73 is engaged with the trench of the guide tube 78.

As the ball screw 70 is relatively displaced along the axis line 03 direction with respect to the subsidiary cylinder 33, the ball nut 71 screwed to the ball screw 70 and supported by the bearing 76 rotatably around the axis line 03 and non-movably along the axis line 03 direction is rotated. As a result, the rotary spindle 72 integratedly connected to the ball nut 71 is drivenly rotated by the ball nut 71 so as to convert a rotational inertia force into a reactive force. Therefore, it is possible to obtain a vibration reduction effect.

As a vibration between a pair of members is converged, the subsidiary piston 34 is restored to its original position using the rotation-constrained plate 73 and the ball screw 70 by virtue of the biasing forces of the restoration springs 74 and 75. For this reason, a residual displacement is not generated in the subsidiary piston 34. In addition, since the orifices 41 and 66 are provided in the main piston 31 and the subsidiary piston 34, respectively, it is possible to spontaneously restore the main piston 31 and the subsidiary piston 34 to their original positions by virtue of a restoration force based on a self-elastic rigidity of a pair of members. Since the actuating fluid flows through the orifices 41 and 66 with a small flow rate, it does not mostly affect a characteristic of the vibration reduction apparatus B.

Next, a description will be made in more detail for effects of the vibration reduction apparatus B according to this embodiment.

First, a description will be made for effects of the main damper unit 32 and the fluid pressure cylinder mechanism 60 serving as an amplification mechanism for the subsidiary damper unit 36.

Assuming that "$F_1$" denotes a load force and "$X_1$" denotes a displacement of the main damper unit 32, "Di" denotes an inner diameter of the main cylinder 30, and "$D_2$" denotes an inner diameter of the subsidiary cylinder 33, an internal measurement area $A_1$ of the main cylinder 30 becomes "$A_1 = \pi D_1^2/4$," and an internal measurement area $A_2$ of the subsidiary cylinder 33 becomes "$A_2 = \pi D_2^2/4$." In addition, a velocity amplification ratio $\alpha$ (ratio of the velocity of the subsidiary piston 34 against the velocity of the main piston 31) corresponds to a ratio of the areas "$\alpha = A_1/A_2 = (D_1/D_2)^2$."

In addition, a displacement $X_2$ of the subsidiary damper unit 36 can be expressed as the following Equation 2 using the displacement $X_1$ of the main damper unit 32. Meanwhile, a force $F_2$ applied to the subsidiary piston 34 is proportional to the internal measurement area of the cylinder. Therefore, it can be expressed as Equation 3.

[Equation 2]

$$X_2 = \frac{A_1}{A_2} F_1 = \alpha X_1 \qquad (2)$$

[Equation 3]

$$F_2 = \frac{A_1}{A_2}F_1 = \frac{F_1}{\alpha} \qquad (3)$$

In this manner, using a fluid pressure cylinder mechanism (amplification mechanism) 60 of the subsidiary damper unit 36, a displacement of $\alpha$ times ($X_2 = \alpha X_1$) and a force of $1/\alpha$ times ($F_2=F_1/\alpha$) are applied to the rotary inertia mass mechanism 35 directly connected to the subsidiary piston 34 through the third piston rod 67.

The main damper unit 32 according to this embodiment is provided with an accumulator 42 connected to (communicating with) the orifice 41. The accumulator 42 applies a pressure to the actuating fluid. Therefore, even when a displacement is small in the main and subsidiary pistons 31 and 34, that is, even when a small earthquake (vibration), it is possible to maintain the aforementioned relationship.

Next, a description will be made for effects of the rotary inertia mass mechanism 35 of the subsidiary damper unit 36.

One end of the ball screw 70 is connected to the subsidiary piston 34. The ball screw 70 is constrained by the rotation-constrained plate 73 non-rotatably around the axis line 03. The ball nut 71 screwed to the ball screw 70 is connected to the inner race 76b of the bearing 76. In the bearing 76, the outer race 76a is fixed to the subsidiary cylinder 33, and the inner race 76b is rotatably supported by the outer race 76a. As a result, the ball nut 71 does not move along the axis line 03 direction and is provided rotatably around the axis line 03.

In the rotary inertia mass mechanism 35, the rotary spindle 72 is integrated into the ball nut 71. Therefore, when the ball screw 70 is displaced by $L_d$ along the axis line 03 direction, the ball nut 71 and the rotary spindle 72 are rotated by a single turn.

In order to prevent the rotary spindle 72 from being decentered due to its self-weight (to prevent the ball nut 71 or the ball screw 70 from being decentered due to the weight of the rotary spindle 72), that is, in order to obtain a reactive force in a radial direction, the bearing 77 for rotatably supporting the ball screw 70 and/or the rotary spindle 72 is provided in the partitioning wall 61 side of the subsidiary cylinder 33.

The rotation-constrained plate 73 is a substantially disk-like steel plate having a convex portion 73a and is integrated into the ball screw 70 coaxially with each other along the axis line 03. In addition, the guide tube 78 is fixed onto the inner surface of the subsidiary cylinder 33, and the convex portion 73a is engaged with the trench formed on the inner surface of the guide tube 78, so that rotation of the rotation-constrained plate 73 around the axis line 03 is constrained. As a result, the rotation-constrained plate 73 is provided to move back and forth only in the axis line 03 direction.

Assuming that "$I_\theta$" denotes a moment of rotary inertia of the rotary spindle 72, and "$L_d$" denotes a lead of the ball screw 70, the inertial mass $\psi 2$ of the rotary inertia mass mechanism 35 configured in this manner can be expressed as the following Equation 4.

[Equation 4]

$$\psi_2 = \left(\frac{2\pi}{L_d}\right)^2 I_\theta \qquad (4)$$

If the effects of the restoration springs 74 and 75 are neglected, the following Equation 5 is obtained from the relative acceleration $a_2$ of the subsidiary piston 34 to the subsidiary cylinder 33 and the force $F_2$ applied to the subsidiary piston 34. A review in consideration of the restoration springs 74 and 75 will be made below.

[Equation 5]

$$F_2 = \psi_2 a_2 = \left(\frac{2\pi}{L_d}\right)^2 I_\theta a_2 \qquad (5)$$

In consideration of a relationship of velocity amplification indicated in review of the effects of the main damper unit 32 and the fluid pressure cylinder mechanism 60, the following Equation 6 is obtained based on relationships "$a_2 = \alpha \times a_1$" and "$F_2 = F_1/\alpha$" (where "$a_1$" denotes the relative acceleration of the main piston 31 with respect to the main cylinder 30). In addition, Equations 7 and 8 are obtained based on Equation 6. Therefore, the main damper unit 32 can exhibit damping performance with an inertial mass $\psi_2$ of $\alpha^2$ times and a load force $F_2$ of $\alpha$ times of the subsidiary damper unit 36.

[Equation 6]

$$F_1 = \left( \frac{2\pi}{L_d} \alpha \right)^2 I_0 a_1 \qquad (6)$$

[Equation 7]

$$\psi_1 = \left( \frac{2\pi}{L_d} \alpha \right)^2 = \alpha^2 \psi_2 \qquad (7)$$

[Equation 8]

$$F_1 = \alpha F_2 \qquad (8)$$

Next, a description will be made for the effects of the restoration mechanism for restoring a damper to its original position after an earthquake.

According to this embodiment, the main damper unit 32 has the orifice 41 in the main piston 31. Therefore, the main damper unit 32 is restored to its original position by virtue of a restoring force based on the elastic rigidity of the structure connected to both ends of the damper. Since the actuating fluid flows through the orifice 41 with a small flow rate, it does not mostly affect a damping characteristic of the main damper unit 32 at the event of an earthquake.

No restoring force is externally applied to the subsidiary damper unit 36 after an earthquake. In particular, after the relief valve 40 is operated, a residual displacement possibly remains in the subsidiary piston 34 even when the main piston 31 is restored to its original position. For this reason, it is necessary to provide a capability of restoring the ball screw 70 to its original position.

In this regard, according to this embodiment, the restoration spring 74 as a restoration mechanism is provided between the rotation-constrained plate 73 integrated with the ball screw 70 and the other end 33b of the subsidiary cylinder 33. In addition, the restoration spring 75 is provided between the rotation-constrained plate 73 and the bearing 76.

The installation positions of the restoration springs 74 and 75 are not particularly limited if the ball screw 70, the rotation-constrained plate 73, and the subsidiary piston 34 can be restored to their original positions after an earthquake. In addition, a significantly small spring rigidity is applied because the rigidity is applied in parallel with the rotary inertia mass mechanism 35.

Assuming that "$k_2$" denotes the spring rigidity of the restoration springs 74 and 75, and "$X_2$" denotes a relative displacement of the subsidiary piston 34 to the subsidiary cylinder 33 (the ball screw 70 and the rotation-constrained plate 73 have the same displacement), the following Equation 9 is obtained based on the aforementioned Equation 5.

[Equation 9]

$$F_2 = \psi_2 a_2 + k_2 X_2 = \left( \frac{2\pi}{L_d} \right)^2 I_0 a_2 + k_2 X_2 \qquad (9)$$

Considering a relationship of velocity amplification (displacement amplification), the following Equation 10 is obtained based on the aforementioned Equation 6. From Equation 10, it is recognized that the main damper unit 32 connected to the subsidiary damper unit 36 has a spring rigidity of $\alpha^2$ times.

Even when the rigidity increases as described above, it does not contribute to vibration reduction. For this reason, according to this embodiment, the restoration springs 74 and 75 have a significantly small spring rigidity to reduce a reactive force of the spring.

[Equation 10]

$$F_1 = \left(\frac{2\pi}{L_d}\alpha\right)^2 I_\vartheta a_1 + \alpha^2 k_2 X_1 \qquad (10)$$

As described above, in the vibration reduction apparatus A, the subsidiary cylinder 10 is housed in the inside of the main cylinder 7, and the main piston 18 is arranged in the internal space 11 of the main cylinder 7 communicating with the internal space 16 of the subsidiary cylinder 10. Therefore, the entire length of the apparatus increases, so that it is difficult to apply the apparatus to a short-span structure.

In this regard, in the vibration reduction apparatus B according to this embodiment (and a seismic control frame C of a building having the same), the main damper unit 32 and the subsidiary damper unit 36 are separated from each other. That is, the vibration reduction apparatus B is a separate damper type structure having two damper units 32 and 36. Therefore, it is necessary to install only the main damper unit 32 within the frame surface of the structure. Accordingly, in the vibration reduction apparatus B, it is possible to install the subsidiary damper unit 36 in an arbitrary position.

Since the main damper unit 32 and the subsidiary damper unit 36 are separated, the main damper unit 32 necessarily installed within the frame surface has the most simple fluid pressure cylinder mechanism (hydraulic mechanism only having the main cylinder 30 and the main piston 31, and the like). Therefore, it is possible to reduce a length. As a result, the main damper unit 32 can be installed within a frame surface of a short-span structure. Therefore, it is possible to reliably and effectively improve damping performance regardless of a configuration of the frame. That is, it is possible to implement a highly versatile vibration reduction apparatus.

In addition, in the vibration reduction apparatus B, the subsidiary damper unit 36 and the main damper unit 32 are connected using the first and second communicating pipes 47 and 48. For this reason, it is not necessary to arrange the subsidiary damper unit 36 within the frame surface. Therefore, even when the entire length of the subsidiary damper unit 36 is longer than the main damper unit 32, the subsidiary damper unit 36 may be selectively installed in an appropriate place. For example, the subsidiary damper unit 36 may be deviatingly installed on a plane or may be installed along the pillar 54 or 57, the brace 52, or the girder 51 or 55.

Since the main damper unit 32 and the subsidiary damper unit 36 are separately configured in this manner, it is possible to reduce a possibility of obstructing a building plan by installing the vibration reduction apparatus, compared to a case where the vibration reduction apparatus A is used in the comparative example. From this point, the vibration reduction apparatus B can effectively improve damping performance with excellent versatility.

Since a ratio between the area of the main cylinder 30 of the main damper unit 32 and the area of the subsidiary cylinder 33 of the subsidiary damper unit 36 is set to "$\alpha$: 1," it is possible to provide a velocity amplification mechanism capable of applying a damper displacement of $\alpha$ times to the subsidiary damper unit 36. As a result, since the displacement increases due to the actuating fluid, it is possible to remove a frictional loss caused by a mechanical mechanism, compared to a case where the displacement increases using a lever or a toggle mechanism. Therefore, it is possible to more efficiently and effectively improve the damping performance.

Conversely, since the lead of the ball screw 70 is reduced to $1/\alpha$ times, the inertial mass increases to $\alpha^2$ times due to the velocity amplification mechanism. For example, the amplification ratio $\alpha$ is set to "$\alpha=4$," the inertial mass becomes 16 times (where "$\alpha$" denotes a velocity amplification ratio). Therefore, even using a small rotary spindle 72, it is possible to generate a large inertial mass. Accordingly, it is possible to configure a large-capacity vibration reduction apparatus with a compact size.

The axial force applied to the ball screw 70 of the subsidiary damper unit 36 becomes $1/\alpha$ times of the axial force of the main damper unit 32. For this reason, it is possible to process the reactive force using the ball screw 70 having a small diameter and use an inexpensive ball screw 70 or ball nut 71. In addition, a component same as an oil damper can be used in the main damper unit 32 or the subsidiary damper unit 36 (fluid pressure cylinder mechanism 60). From this point, it is also possible to reduce the cost of the entire apparatus.

Furthermore, since the relief valve (safety valve or relief mechanism) 40 is provided in the main piston 31 of the main damper unit 32 or the subsidiary piston 34 of the subsidiary damper unit 36, it is possible to prevent an excessive load force from being generated in the damper. As a result, for example, unlike a frictional damper using a slide operation, it is possible to prevent degradation of performance caused by abrasion and provide safe damping performance over again for a long time. That is, it is possible to implement a mechanism or apparatus having excellent fail-safe performance.

Since the orifice 41 or 66 or the restoration spring (restoration mechanism) 74 or 75 for restoring the piston to its original position is provided, it is possible to automatically restore any part of the damper to its original position after an earthquake. For this reason, even when a plurality of shocks are generated, as in a series of tremors occurring after a main shock of an earthquake, the piston in the damper is not drifted to a particular direction, or a stroke of the ball screw 70 is not reduced by residual deformation. Therefore, it is possible to maintain initial excellent damping performance continuously and persistently.

Alternatively, a characteristic of an attenuation coefficient C may be given by enlarging the orifice 66 of the subsidiary piston 34. In this case, assuming that "$\psi$" denotes an inertial mass of the subsidiary damper unit 36, "a series arrangement of an attenuation factor $\alpha^2 \times C$ and an inertial mass $\alpha^2 \times \psi$ (where "$\alpha$" denotes a velocity amplification ratio)" becomes equivalent to the main damper unit 32. In addition, when the subsidiary piston 34 and the ball screw 70 of the rotary inertia mass mechanism 35 are connected using a spring 80 (spring constant: k) as illustrated in FIG. 5, "a series arrangement of an attenuation factor $\alpha^2 \times C$, a spring $\alpha^2 \times k$ and an inertial mass $\alpha^2 \times \psi$" becomes equivalent to the main damper unit 32. In these cases, since the attenuation factor, the spring, and the inertial mass are connected in series, the applied axial force becomes $1/\alpha$ times that of the main damper unit 32. Therefore, if an attenuation factor, a spring, or an inertial mass having a small capacity (load force) is combined with the subsidiary damper unit 36, it is possible to obtain the same effect as in a case where an attenuation factor, a spring, or an inertial mass having a large capacity multiplied by "$\alpha^2$" times is installed in the main damper unit 32.

Embodiments of this invention were described above, but the above embodiments are merely examples of applications of this invention, and the technical scope of this invention is not limited to the specific constitutions of the above embodiments.

For example, according to this embodiment, the subsidiary damper unit 36 is configured such that the ball screw 70 of the rotary inertia mass mechanism 35 is installed non-rotatably with respect to the subsidiary cylinder 33 and movably (displaceably) in the axis line 03 direction. In addition, the ball nut 71 is installed rotatably with respect to the subsidiary cylinder 33 and non-movably (non-displaceably) in the axis line 03 direction. Furthermore, the rotary spindle 72 is integratedly connected to the ball nut 71.

In comparison, if the rotary spindle 72 can be rotated using a ball screw mechanism including the ball screw 70 and the ball nut 71 by displacing the subsidiary piston 34 along the axis line 03 direction, it is possible to obtain the same effects as those of this embodiment. For this reason, alternatively, for example, the ball screw 70 may be rotatable by connecting the ball screw 70 to the spring 80 using a rotatable coupler. In addition, the ball nut 71 may be non-rotatable by fixing the ball nut 71 to the subsidiary cylinder 33 without using the bearing 77. Furthermore, the rotary spindle 72 may be integratedly connected to the ball screw 70 to make the ball screw 70 rotatable.

In addition, the rotation-constrained plate 73 is connected to the ball screw 70, and the restoration springs 74 and 75 are interposed between the rotation-constrained plate 73 and the subsidiary cylinder 33 and between the rotation-constrained plate 73 and the bearing 76, respectively. Alternatively, unless particularly necessary, the restoration springs 74 and 75 may be omitted. Furthermore, the restoration mechanism is not necessary to have the restoration springs 74 and 75. Moreover, as illustrated in FIG. 5, the restoration spring 81 may be provided between one end 33a of the subsidiary cylinder 33 and the leading edge of the second piston rod 65 protruding to the outside from the one end 33a along the axis line 03 direction. Naturally, in this case, it is possible to obtain the same effects as those of this embodiment.

Although the relief valve 40 as a fail-safe mechanism is provided in the main piston 31 in this embodiment, it may be omitted if not necessary. In addition, the relief valve may be provided in the subsidiary piston 34 instead of the main piston 31. Furthermore, the fail-safe capability may be provided by adding a torque limiting mechanism in the ball screw mechanism instead of the relief valve 40. Both ends of the main damper unit 32 may have ball joints instead of the clevises 49 and 50 (illustrated).

The fluid pressure cylinder mechanism 60 and the rotary inertia mass mechanism 35 may not be arranged in a cylinder having the same diameter (subsidiary cylinder 33). That is, the diameter of the rotary inertia mass mechanism 35 may increase or decrease with respect to the fluid pressure cylinder mechanism 60 as necessary.

The fluid pressure cylinder mechanism 60 and the rotary inertia mass mechanism 35 may not be arranged coaxially. That is, the subsidiary piston rod (third piston rod 67) of the fluid pressure cylinder mechanism 60 and the ball screw 70 of the rotary inertia mass mechanism 35 may be connected using a gear or the like to make them operable in synchronization.

**Claims**

1. A vibration reduction apparatus (B) that reduces a relative vibration between a pair of members, comprising:

a main damper unit (32) interposed between the pair of members to reduce the relative vibration;
a subsidiary damper unit (36) arranged separately from the main damper unit (32); and
first and second communicating pipes (47 and 48) that connect the main damper unit (32) and the subsidiary damper unit (36),

wherein the main damper unit (32) has

a main cylinder (30),

a main piston (31) arranged slidably inside the main cylinder (30) to partition an inner side of the main cylinder (30) into first and second compartments (37 and 38), and

a piston rod (39) connected to the main piston (31) and provided to extend to an outer side of the main cylinder (30),

the subsidiary damper unit (36) has

a subsidiary cylinder (33),

a partitioning wall (61) that partitions an inner side of the subsidiary cylinder (33) into a first internal space (62) of one end (33a) side and a second internal space (63) of the other end (33b) side of the subsidiary cylinder (33),

a fluid pressure cylinder mechanism (60) arranged in the first internal space (62); and

a rotary inertia mass mechanism (35) arranged in the second internal space (63),

the fluid pressure cylinder mechanism (60) has

a subsidiary piston (34) slidably arranged in the first internal space (62) of the subsidiary cylinder (33) to partition the first internal space (62) into third and fourth compartments (45 and 46), and

a subsidiary piston rod (67) connected to the subsidiary piston (34) and provided extend to the second internal space (63) side through the partitioning wall (61),

the rotary inertia mass mechanism (35) has

a ball screw (70) connected to the subsidiary piston rod (67),

a ball nut (71) screwed to the ball screw (70) and provided relatively movably along an axis line direction of the rotary inertia mass mechanism (35) with respect to the ball screw (70) and rotatably around the axis line,

a rotary spindle (72) installed in the ball nut (71) to rotate around the axis line to follow the ball nut (71), and

a rotation-constrained plate (73) installed in the ball screw (70) to constrain the ball screw (70) movably in the axis line direction and non-rotatably around the axis line,

the first and third compartments (37 and 45) communicate with each other through the first communicating pipe (47),

the second and fourth compartments (38 and 46) communicate with each other through the second communicating pipe (48), and

the first to fourth compartments (37, 38, 45, and 46) and the first and second communicating pipes (47 and 48) are filled with an actuating fluid.

2. The vibration reduction apparatus (B) according to claim 1, further comprising at least one of:

an orifice (41) provided in the main piston (31) to cause the first and second compartments (37 and 38) to communicate with each other; and

an orifice (66) provided in the subsidiary piston (34) to cause the third and fourth compartments (45 and 46) to communicate with each other.

3. The vibration reduction apparatus (B) according to claim 1 or 2, further comprising a restoration spring (74 or 75) that indirectly biases the subsidiary piston (34) in the axis line direction of the subsidiary cylinder (33) to restore the subsidiary piston (34) to its original position.

4. The vibration reduction apparatus (B) according to any one of claims 1 to 3, further comprising at least one of:

a relief valve (40) provided in the main piston (31) to flow the actuating fluid between the first and second compartments (37 and 38) when a pressure difference between the first and second compartments (37 and 38) exceeds a predetermined relief pressure; and

a relief valve provided in the subsidiary piston (34) to flow the actuating fluid between the third and fourth compartments (45 and 46) when a pressure difference between the third and fourth compartments (45 and 46) exceeds a predetermined relief pressure.

5. The vibration reduction apparatus (B) according to any one of claims 1 to 4, wherein the subsidiary cylinder (33) has a diameter smaller than that of the main cylinder (30).

FIG.1

FIG.2

FIG.3

FIG.4

FIG.5

PRESSURE : P

AREA : $A_1$

REACTIVE FORCE : $P_1 = pA_1$

DISPLACEMENT : $\delta_1$

$$\alpha = \frac{A_1}{A_2}$$

PRESSURE : P

AREA : $A_2$

REACTIVE FORCE : $P_2 = pA_2 = pA_1 / \alpha$

DISPLACEMENT : $\delta_2 = \alpha \, \delta_1$

FIG.6

FIG.7

FORCE F1
DISPLACEMENT X1

FORCE F2
DISPLACEMENT X2

FIG.8

FIG.9

**EUROPEAN SEARCH REPORT**

Application Number

EP 14 16 4828

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/133053 A1 (LAGIEWKA LUCJAN [PL]; GUMULA STANISLAW [PL]; JAKUBIAK ADAM [PL]) 27 October 2011 (2011-10-27) * the whole document * | 1-5 | INV. F16F7/10 |
| A | US 6 385 917 B1 (KONOMOTO MASASHI [JP]) 14 May 2002 (2002-05-14) * the whole document * | 1-5 | |
| A | WO 2012/054774 A2 (PENSKE RACING SHOCKS [US]; GARTNER BILL J [US]) 26 April 2012 (2012-04-26) * the whole document * | 1-5 | |
| A | WO 2005/121593 A1 (PIONTEK GEORG [DE]; LAGIEWKA PRZEMYSLAW [PL]; GUMULA STANISLAW [PL]) 22 December 2005 (2005-12-22) * the whole document * | 1-5 | |
| X,P | WO 2014/006477 A2 (EPAR SP Z O O [PL]) 9 January 2014 (2014-01-09) * the whole document * | 1-5 | TECHNICAL FIELDS SEARCHED (IPC) F16F E04H |

The present search report has been drawn up for all claims

| Place of search | Date of completion of the search | Examiner |
|---|---|---|
| The Hague | 23 October 2014 | Werth, Jochen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 14 16 4828

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2014

| Patent document cited in search report | | Publication date | Patent family member(s) | | Publication date |
|---|---|---|---|---|---|
| WO 2011133053 | A1 | 27-10-2011 | EP | 2561244 A1 | 27-02-2013 |
| | | | US | 2013033047 A1 | 07-02-2013 |
| | | | WO | 2011133053 A1 | 27-10-2011 |
| US 6385917 | B1 | 14-05-2002 | TW | 571038 B | 11-01-2004 |
| | | | US | 6385917 B1 | 14-05-2002 |
| WO 2012054774 | A2 | 26-04-2012 | US | 2013319807 A1 | 05-12-2013 |
| | | | WO | 2012054774 A2 | 26-04-2012 |
| WO 2005121593 | A1 | 22-12-2005 | DE | 102004028477 A1 | 29-12-2005 |
| | | | DE | 112005001941 A5 | 03-04-2008 |
| | | | WO | 2005121593 A1 | 22-12-2005 |
| WO 2014006477 | A2 | 09-01-2014 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 11201224 A
- JP 3250795 B
- JP 2007010110 A
- JP 2007205433 A
- JP 2011158015 A